# EUROPÄISCHE PATENTSCHRIFT

(11) **EP 2 926 038 B1**
(45) Veröffentlichungstag und Bekanntmachung des Hinweises auf die Patenterteilung: **08.02.2017**
(21) Anmeldenummer: 13783928.8
(22) Anmeldetag: 30.10.2013
(51) Int. Cl.: F16K 7/12

(54) **MEMBRANVENTIL**
MEMBRANE VALVE
SOUPAPE À MEMBRANE

(30) Priorität: 03.12.2012 DE 102012222062
(43) Veröffentlichungstag der Anmeldung: 07.10.2015
(73) Patentinhaber: GEMÜ Gebr. Müller Apparatebau GmbH & Co. Kommanditgesellschaft, 74653 Ingelfingen (DE)
(72) Erfinder: FLAIG, Raphael, 5630 Muri (CH); MUELLER, Fritz, 74653 Ingelfingen-Criesbach (DE)
(74) Vertreter: DREISS Patentanwälte PartG mbB
(86) Internationale Anmeldenummer: PCT/EP2013/072665
(87) Internationale Veröffentlichungsnummer: WO 2014/086534

(56) Entgegenhaltungen:
- EP-A1- 0 795 707
- WO-A1-2010/025905
- DE-U1-202005 002 152

## Beschreibung

Die Erfindung betrifft ein Membranventil, insbesondere für fluide Medien, mit einem Ventilkörper, einer Membran, einem Druckstück und einem Antrieb für das Druckstück, wobei die Membran mittels eines Verbindungselements mit dem Druckstück gekoppelt ist, wobei das Verbindungselement eine von der Membran in Richtung des Druckstücks abragende Wand aufweist, an welcher an einer Seite ein seitlich vorspringender Rasthaken und auf der anderen Seite ein Freiraum vorgesehen ist, so dass die Wand, zum Verbinden des Rasthakens mit einer entsprechenden Aufnahme am Druckstück, ausweichen kann.

Es sind Membranventile bekannt, die einen Ventilkörper mit einem Zufluss und einem Abfluss aufweisen (DE 20 2005 002 152 U1). Weiterhin weisen die Ventilkörper einen von einer Membran abdichtbaren Ventilsitz auf, wobei die Membran über ein Verbindungselement mit einem Druckstück eines Antriebs in Verbindung steht. Die bekannten Membranen können ein- oder zweischichtig ausgebildet sein. Aus der WO 2010/025 905 A1 ist eine einschichtige Membran bekannt, die auch einstückig mit dem Verbindungselement ausgebildet oder an der das Verbindungselement angeformt sein kann. Die Membran ist aus dem gleichen Kunststoff hergestellt, wie der Ventilkörper, nämlich aus Polyethylen (PE). Außerdem sind der Ventilkörper und die Membran durch Ultraschallschweißen fest miteinander zu einer fluiddichten und mit dem Antrieb koppelbaren Ventilkörpereinheit verbunden.

Durch die feste Verbindung von Ventilkörper, Membran und Verbindungselement zu einer abgedichteten Ventilkörpereinheit ist es möglich, die Ventilkörpereinheit als Einwegeinheit auszubilden und das Membranventil in ein Einwegschlauchsystem bzw. eine vorsterilisierbare pharmazeutische Anlage zu integrieren. Die Ventilkörpereinheit lässt sich somit kostengünstig als Wegwerf- bzw. Single-use-Ventilkörpereinheit ausbilden und an einen wieder verwendbaren Antrieb ankoppeln bzw. mit diesem verbinden. Durch die feste Verbindung von Membran und Ventilkörper wird die Ventilkörpereinheit während der Transportphase abgedichtet. Damit wird eine Kontamination des Ventilraumes bzw. der Umwelt vermieden.

Durch die feste Verbindung des Verbindungselements mit der Membran kann die Membran nicht nur in ihre Schließstellung gedrückt sondern auch in ihre Öffnungsstellung gezogen werden, so dass der Ventilraum im Ventilkörper relativ großvolumig ausgebildet und dadurch ein, z.B. für die Schlauchsysteme von Filtrationsanlagen, ausreichend großer Volumenstrom erzielt werden kann. Es hat sich jedoch gezeigt, dass der erzielbare Hub zwischen Schließ- und Offenstellung begrenzt ist, da sonst die Kupplung von Druckstück und Verbindungselement ungewollt gelöst wird, indem das Verbindungselement aufgrund zu hohen Zuges ausrastet.

Der Erfindung liegt daher die Aufgabe zugrunde, ein Membranventil bereit zu stellen, bei welchem die Membran einen größeren Hub ausführen kann ohne dass die Gefahr besteht, dass das Verbindungselement und somit die Membran vom Druckstück abkoppelt.

Diese Aufgabe wird bei einem Membranventil der eingangs genannten Art erfindungsgemäß dadurch gelöst, dass ein ortsfester Stift vorgesehen ist, der bei vom Ventilsitz des Ventilkörpers abgehobener Membran in den Freiraum hinter der Wand eingreift und insbesondere bei auf dem Ventilsitz aufliegender Membran aus dem Freiraum heraustritt.

Beim erfindungsgemäßen Membranventil ist die Membran mittels eines Rasthakens mit dem Druckstück verbunden, so dass die Ankopplung einfach dadurch erfolgt, dass das Verbindungselement zusammen mit der Membran auf das Druckstück aufgerastet wird. Beim Schließen des Membranventils birgt diese Verbindungsart keine Gefahr. Wird das Membranventil geöffnet, dann wird die Membran vom Druckstück über das Verbindungselement vom Ventilsitz abgehoben, indem auf das Verbindungselement Zug ausgeübt wird. Eine einfache Rastverbindung kann dabei jedoch ungewollt gelöst werden. Bei der erfindungsgemäßen Lösung wird dies dadurch verhindert, dass die Wand, welche den Rasthaken trägt, aufgrund des im Freiraum sich befindenden Stifts nicht ausweichen kann, und dadurch der Rasthaken nicht aus seiner Aufnahme im Druckstück heraustreten kann. Dadurch können wesentlich höhere Zugkräfte auf das Verbindungselement ausgeübt und die Membran vom Ventilsitz entfernt werden.

Eine bevorzugte Ausführungsform der Erfindung sieht vor, dass das Verbindungselement topfartig ausgebildet ist und die Öffnung in Richtung des Druckstücks weist. Hierdurch können die am Verbindungselement angreifenden Kräfte auf einfache Weise gleichmäßig über den Umfang verteilt werden. Das Verbindungselement ist nach Art einen hohlen Rastzapfens ausgeführt.

Bei einer Weiterbildung des erfindungsgemäßen Membranventils weist das topfartige Verbindungselement einen kreiszylinderförmigen Zapfen auf, wobei an seinem Außenumfang der oder die Rasthaken angeordnet ist bzw. sind. Vorteilhaft ist das Druckstück von einer ortsfesten Hülse umgeben, in welcher das Druckstück verfahrbar ist. Die Hülse bildet somit eine Gleithülse für das Druckstück.

Bei einer bevorzugten Ausführungsform ist in der Hülse ein Querbolzen gelagert. Dieser Querbolzen ist, wie die Hülse selbst, ortsfest. Zur Aufnahme des Querbolzens weist das Druckstück einen quer zu seiner Bewegungsrichtung verlaufenden Durchbruch auf, welcher vom Querbolzen durchsetzt ist. Außerdem ist am Querbolzen der ortsfeste Stift gelagert. Dieser durchsetzt wiederum das Druckstück in dessen Bewegungsrichtung und in Richtung der Membran. Auf diese Weise befindet sich innerhalb des verlager- oder verschiebbaren Druckstücks ein ortsfestes Element, welches mit dem topfartigen Verbindungselement zusammenwirkt, insbesondere in dieses eingreift.

Das freie Ende des ortsfesten Stifts ist derart geformt, dass es bei vom Ventilsitz abgehobener Membran in das topfartige Verbindungselement eingreift und an der Innenfläche der Wand anliegt. Dadurch wird ein Ausweichen der Wand verhindert, so dass der Rasthaken auch bei hohen Zugkräften nicht außer Eingriff von der ihn aufnehmenden Ausnehmung kommt. Erst wenn das freie Ende des ortsfesten Stifts bei auf dem Ventilsitz aufliegender Membran aus dem topfartigen Verbindungselement heraustritt kann das Verbindungselement und somit die Membran vom Druckstück abgekoppelt und z.B. ausgetauscht werden.

Weitere Vorteile, Merkmale und Einzelheiten der Erfindung ergeben sich aus den Unteransprüchen sowie der nachfolgenden Beschreibung, in der unter Bezugnahme auf die Zeichnung ein besonders bevorzugtes Ausführungsbeispiel im Einzelnen beschrieben ist. Dabei können die in der Zeichnung dargestellten sowie in der Beschreibung und/oder in den Ansprüchen erwähnten Merkmale jeweils einzeln für sich oder in beliebiger Kombination erfindungswesentlich sein.

In der Zeichnung zeigen:
Figur 1 eine Seitenansicht eines Membranventils mit Antrieb, teilweise aufgeschnitten;
Figur 2 die Membran mit integriertem Verbindungselement in Seitenansicht;
Figur 3 die Membran gemäß Figur 2 im Querschnitt;
Figur 4 eine vergrößerte Wiedergabe des Druckstücks mit angekuppelter Membran bei geschlossenem Membranventil; und
Figur 5 eine vergrößerte Wiedergabe des Druckstücks mit angekuppelter Membran bei geöffnetem Membranventil.

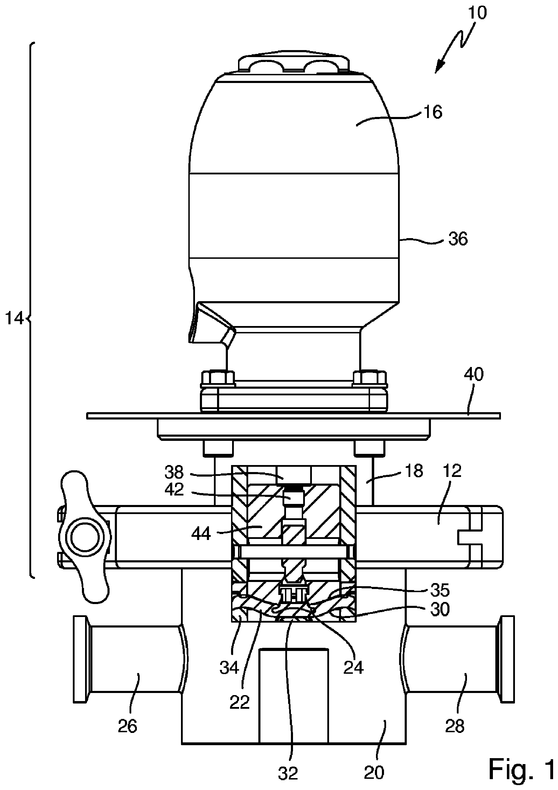

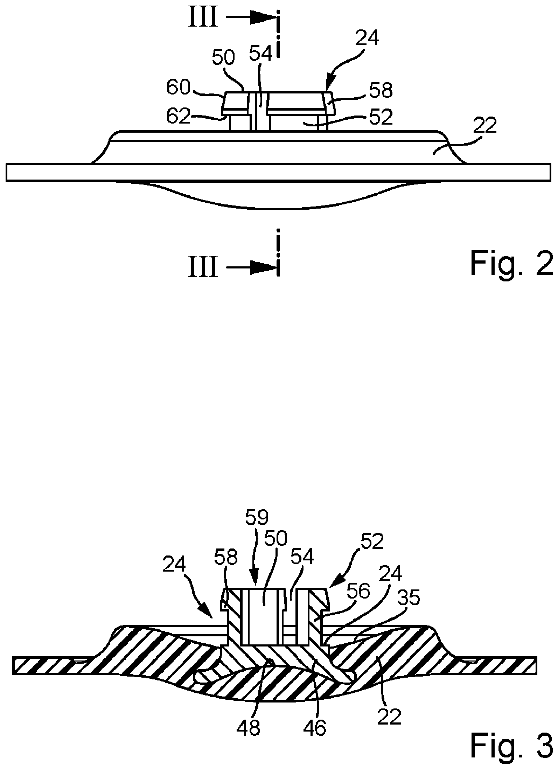

Die Figur 1 zeigt ein insgesamt mit 10 bezeichnetes Membranventil, bei welche mittels einer Klemmschelle 12 ein Ventilkörper 20 an einem Antrieb 14 befestigt ist, der ein elektrisch, hydraulisch oder pneumatisch betriebenes Antriebsaggregat 16 und einen Adapter 18 aufweist. Der Ventilkörper 20 ist mit einer Membran 22 mit einem Verbindungselement 24 bestückt, welches in den Figuren 2 bis 5 im Detail wiedergegeben ist. Der Ventilkörper 20 weist einen Zufluss 26 und einen Abfluss 28 auf, die in einen zwischen dem Ventilkörper 20 und der Membran 22 begrenzten Ventilraum 30 münden, wobei die Verbindung zwischen Zufluss 26 und Abfluss 28 durch Anpressen der Membran 22 gegen einen Ventilsitz 32 unterbrochen wird.

Die Membran 22 ist an einem den Ventilsitz 32 überragenden Absatz 34 des Ventilkörpers 20 gelagert und dichtet den Ventilkörper 20 gegenüber dem Antrieb 14 und der Umgebung ab. Der Ventilkörper 20 ist im Ausführungsbeispiel aus Polyproylen (PP) und die Membran 22 aus einem thermoplastischen Elastomer (TPE) ausgebildet. Andere Materialien und Materialkombinationen sind möglich und die Erfindung soll nicht auf die genannten Materialien beschränkt sein.

Auf ihrer vom Ventilkörper 20 abgewandten Rückseite 35 tritt aus der Membran 22 das koaxial mit der Membran 22 verbundene, insbesondere durch ein 2-K-Spritzgussverfahren integrierte Verbindungselement 24 hervor, das eine größere Breite als der Ventilsitz 32 besitzt. Die Membran 22 ist bei geschlossenem Membranventil 10 zum Ventilsitz 32 hin konvex ausgebildet, wobei der korrespondierende Ventilsitz 32 zur Membran 22 hin ebenfalls konvex ausgebildet ist. Die Membran 22 und der Ventilkörper 20 sind flüssigkeits- und gasdicht im Bereich des Absatzes 34 insbesondere durch Ultraschallschweißung miteinander verbunden.

Das Antriebsaggregat 16 weist im Wesentlichen ein topfförmiges Gehäuse 36 mit einer in deren Längsrichtung verschieblichen Stellspindel 38 auf. Das Gehäuse 36 lässt sich in bekannter Weise von innen z.B. an ein Schaltschrankblech 40 ansetzen und von außen über den Adapter 18 befestigen. Auf das freie Ende 42 der Stellspindel 38 ist ein Druckstück 44 aufgeschraubt, dessen freies Ende wiederum mit dem Verbindungselement 24 ver- und entrastet werden kann.

Die Figuren 2 und 3 zeigen die Membran 22 mit integriertem Verbindungselement 24. Es ist deutlich erkennbar, dass das Verbindungselement 24 mit einem ersten Bereich 46 mit einem pilzkopfförmigen und konkaven freien Ende 48 ausgebildet ist. Das konkave Ende 48 ist zapfenartig im konvexen Abschnitt der Membran 22 gelagert, so dass in der Membran 22 eine linsenförmige Materialanhäufung im Bereich des konkaven Endes 48 des Verbindungselements 24 entsteht. Hierdurch wird eine optimale Kraftübertragung, insbesondere beim Öffnen des Membranventils 10, d.h. beim Abheben der Membran 22 vom Ventilsitz 32, vom Verbindungselement 24 auf die Membran 22 erzielt. Das konkave Ende 48 des Verbindungselements 24 besitzt eine im Querschnitt halbrunde umlaufende Umfangskante, so dass Kerbwirkungen im Material der Membran 22 vermieden werden.

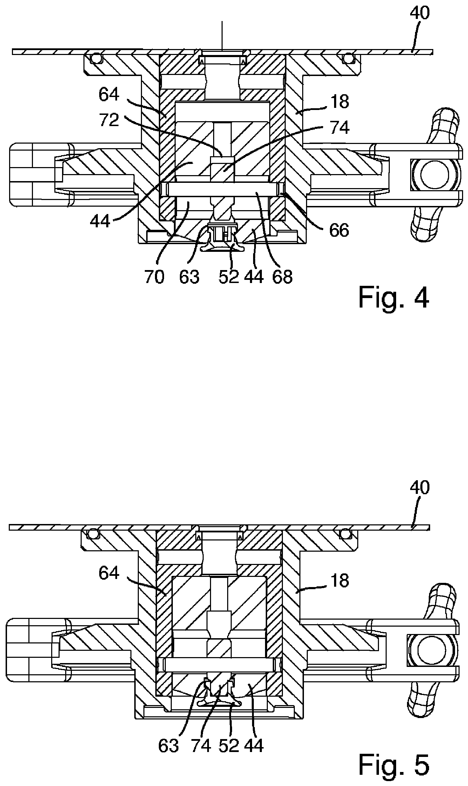

Der von der Membran 22 abgewandte zweite Bereich 50 des Verbindungselements 24 ist topfförmig und als Rastzapfen 52 ausgebildet, der zur Befestigung des Verbindungselements 24 am Druckstück 44 dient. Hierfür weist der Rastzapfen 52 axiale Schlitze 54 auf, wodurch insgesamt drei Wände oder Finger 56 gebildet werden, die an ihren freien Enden mit Rastnasen 58 versehen sind, die radial nach außen abragen. Außerdem ist der Rastzapfen 52 hohl als Hohlzapfen 59 ausgebildet. Die Rastnasen 58 besitzen eine distale Einlaufschräge 60 und eine proximale Schulter 62 zur Verrastung im Druckstück 44. Dieses weist eine Aufnahmebohrung 63 (Figur 5) auf, in welche die Rastnasen 58 beim erstmaligen Schließen des Membranventils 10 einfahren und in hierfür vorgesehene Hinterschneidungen einrasten. Der Kraftaufwand für das Einrasten ist aufgrund der relativ elastischen Finger 56 und der Einlaufschrägen 60 gering. Die Abzugskraft ist jedoch hoch, da die Schultern 62 den Rastzapfen 52 optimal im Druckstück 44 verankern.

Die Figur 4 zeigt den in das Druckstück 44 eingerasteten Rastzapfen 52, wobei sich das Membranventil 10 in seiner Schließlage befindet, d.h. das Druckstück 44 ist ausgefahren, so dass die Membran 22 auf dem Ventilsitz 32 aufliegt.

Ferner ist erkennbar, dass im Adapter 18 eine Gleithülse 64 angeordnet ist, die koaxial zur Achse des Druckstücks 44 liegt und in welcher das Druckstück 44 verschiebbar ist. Diese Gleithülse 64 ist mit einer Querbohrung 66 versehen, in welcher ein Querbolzen 68 gelagert ist. Dieser Querbolzen 68 durchsetzt auch das Druckstück 44 in einem quer zu seiner Bewegungsrichtung verlaufenden Durchbruch 70. Schließlich ist im Druckstück 44 eine koaxiale Bohrung 72 vorgesehen, in welcher ein Stift 74 gleitend gelagert ist, wobei auch der Stift 74 vom Querbolzen 68 durchsetzt ist. Die Gleithülse 64, der darin gelagerte Querbolzen 68 und der am Querbolzen 68 gelagerte Stift 74 sind ortsfest gegenüber dem Druckstück 44, d.h. sie machen die Verschiebebewegungen des Druckstücks 44 nicht mit. Dies führt dazu, dass der Stift 74 beim Öffnungsvorgang des Membranventils 10, bei welchem die Membran 22 vom Druckstück 44 abgehoben wird, oberhalb des Rastzapfens 52 verbleibt und der Rastzapfen 52 dem Stift 74 angenähert wird und schließlich der Stift 74 in den topfförmigen Rastzapfen 52 eingreift.

Diese Lage des Rastzapfens 52, die er in der Offenlage des Membranventils 10 einnimmt, ist in Figur 5 dargestellt. Dabei wird die Verschiebebewegung des Druckstücks 44 und des angekuppelten Rastzapfens 52 nicht behindert. Da für die Öffnung des Membranventils 10 Zugkräfte vom Druckstück 44 auf den Rastzapfen 52 ausgeübt werden, besteht normalerweise die Gefahr, dass der Rastzapfen 52 vom Druckstück 44 ausrastet, indem die Wände oder Finger 56 sich radial nach innen biegen und die Schultern 62 der Rastnasen 58 von den Hinterschneidungen im Druckstück 44 frei kommen. Dies wird bei der Erfindung durch den in den Rastzapfen 52 eingreifenden Stift 74 verhindert, da nunmehr die Finger 56 nicht mehr ausweichen können. Der Rastzapfen 52 ist am Druckstück 44 gesichert.

Das Eingreifen des Stiftes 74 beginnt ab einer Hubhöhe von ca. 1,8 mm. Da der Stift 74 bei ausgefahrenem Druckstück 44 nicht in den Rastzapfen 52 eingreift, ist ein Wechsel der Membran 22 problemlos möglich, da die Wände oder Finger 56 radial nach innen gebogen und die Finger 56 ungehindert aus den Hinterschneidungen im Druckstück 44 ausgerastet werden können. Es können also wesentlich höhere Zugkräfte auf die Membran 22 übertragen werden. Ein weiterer Vorteil wird darin gesehen, dass, da in den Adapter 18 (oder das Zwischenstück) die Gleithülse 64 als separates Bauteil eingesetzt wird, das Membranventil 10 einfach montiert werden kann. Ferner dient die Gleithülse 64 zur exakten und reibungsfreien Führung des Druckstücks 44. Ein Einrasten des Rastzapfens 52 ist somit auch bei schräg liegenden Membranventilen 10 mit Maßabweichungen gewährleistet, bei denen der Rastzapfen 52 zudem auch außermittig liegen kann oder der Rastzapfen 52 geringfügig unrund ist.

Der Ventilkörper 20 kann als Single-use-Ventilkörpereinheit z.B. im sterilen Pharmabereich, Reinraumbereich oder Lebensmittelbereich verwendet werden. Als mehrfach verwendbarer Ventilkörper 20 kann er in jedem denkbaren Bereich, in welchem auch Kunststoffventile eingesetzt werden können, verwendet werden.

## Patentansprüche

1. Membranventil (10), insbesondere für fluide Medien, mit einem Ventilkörper (20), einer Membran (22), einem Druckstück (44) und einem Antrieb (14) für das Druckstück (44), **dadurch gekennzeichnet, dass** die Membran (22) mittels eines Verbindungselements (24) mit dem Druckstück (44) gekoppelt ist, wobei das Verbindungselement (24) eine von der Membran (22) in Richtung des Druckstücks (44) abragende Wand (56) aufweist, an welcher an einer Seite ein seitlich vorspringender Rasthaken (58) und auf der anderen Seite ein Freiraum (50) vorgesehen ist, so dass die Wand (56) zum Verbinden des Rasthakens (58) mit einer entsprechenden Aufnahme (63) am Druckstück (44) ausweichen kann, wobei ein ortsfester Stift (74) vorgesehen ist, der bei vom Ventilsitz (32) des Ventilkörpers (20) abgehobener Membran (22) in den Freiraum (50) eingreift und bei auf dem Ventilsitz (32) aufliegender Membran (22) aus dem Freiraum (50) heraustritt.

2. Membranventil nach Anspruch 1, **dadurch gekennzeichnet, dass** das Verbindungselement (24) topfartig ausgebildet ist und die Öffnung in Richtung des Druckstücks (44) weist.

3. Membranventil nach Anspruch 2, **dadurch gekennzeichnet, dass** das topfartige Verbindungselement (24) einen zylinderförmigen Abschnitt aufweist und an seinem Außenumfang den oder die Rasthaken (58) aufweist.

4. Membranventil nach einem der vorhergehenden Ansprüche, **dadurch gekennzeichnet, dass** das Druckstück (44) von einer ortsfesten Hülse (64) umgeben ist und in der Hülse (64) verfahrbar ist.

5. Membranventil nach Anspruch 4, **dadurch gekennzeichnet, dass** in der Hülse (64) ein Querbolzen (68) gelagert ist.

6. Membranventil nach Anspruch 5, **dadurch gekennzeichnet, dass** das Druckstück (44) einen quer zu seiner Bewegungsrichtung verlaufenden Durchbruch (70) aufweist, welcher vom Querbolzen (68) durchsetzt ist.

7. Membranventil nach Anspruch 4 oder 5, **dadurch gekennzeichnet, dass** am Querbolzen (68) der ortsfeste Stift (74) gelagert ist.

8. Membranventil nach einem der vorhergehenden Ansprüche, **dadurch gekennzeichnet, dass** der ortsfeste Stift (74) das Druckstück (44) in dessen Bewegungsrichtung und in Richtung des Membran (22) durchsetzt.

9. Membranventil nach Anspruch 2 und einem der vorhergehenden Ansprüche, **dadurch gekennzeichnet, dass** das freie Ende des ortsfesten Stifts (74) derart geformt ist, dass es bei vom Ventilsitz (32) abgehobener Membran (22) in das topfartige Verbindungselement (24) eingreift und an der Innenfläche der Wand (56) anliegt.

10. Membranventil nach Anspruch 2 und einem der vorhergehenden Ansprüche, **dadurch gekennzeichnet, dass** das freie Ende des ortsfesten Stifts (74) bei auf dem Ventilsitz (32) aufliegender Membran (22) aus dem topfartigen Verbindungselement (24) heraustritt.

## Claims

1. Diaphragm valve (10), in particular for fluid media, with a valve body (20), a diaphragm (22), a thrust piece (44) and a drive (14) for the thrust piece (44), **characterised in that** the diaphragm (22) is coupled with the thrust piece (44) by means of a connecting element (24), said connecting element (24) having a wall (56) projecting from the diaphragm (22) in the direction of the thrust piece (44), with a locking lug (58) projecting laterally on one side thereof and with a free space (50) on the other side, so that the wall (56) can deflect in order to connect the locking lug (58) with a corresponding recess (63) on the thrust piece (44), wherein a fixed pin (74) is provided which, when the diaphragm (22) is raised from the valve seat (32) of the valve body (20), engages in the free space (50) and which disengages from the free space (50) when the diaphragm (22) lies on the valve seat (32).

2. Diaphragm valve according to claim 1, **characterised in that** the connecting element (24) is pot-like in form and the opening points in the direction of the thrust piece (44).

3. Diaphragm valve according to claim 2, **characterised in that** the pot-like connecting element (24) has a cylindrical section and carries the locking lug (58) or tabs on the outer periphery thereof.

4. Diaphragm valve according to one of the preceding claims, **characterised in that** the thrust piece (44) is surrounded by a fixed sleeve (64) and can be moved within the sleeve (64).

5. Diaphragm valve according to claim 4, **characterised in that** a transverse bolt (68) is mounted in the sleeve (64).

6. Diaphragm valve according to claim 5, **characterised in that** the thrust piece (44) has a through-opening (70) running transversely to its direction of movement through which the transverse bolt (68) passes.

7. Diaphragm valve according to claim 4 or 5, **characterised in that** the fixed pin (74) is mounted on the transverse bolt (68).

8. Diaphragm valve according to one of the preceding claims, **characterised in that** the fixed pin (74) passes through the thrust piece (44) in its direction of movement and in the direction of the diaphragm (22).

9. Diaphragm valve according to claim 2 and one of the preceding claims, **characterised in that** the free end of the fixed pin (74) is formed such that, when the diaphragm (22) is raised from the valve seat (32), it engages in the pot-like connecting element (24) and rests against the inner surface of the wall (56).

10. Diaphragm valve according to claim 2 and one of the preceding claims, **characterised in that**, when the diaphragm (22) lies on the valve seat (32), the free end of the fixed pin (74) disengages from the pot-like connecting element (24).

## Revendications

1. Soupape à membrane (10), en particulier pour des milieux fluides, comprenant un corps (20) de soupape, une membrane (22), une pièce de pression (44) et un entraînement (14) pour la pièce de pression (44), **caractérisée en ce que** la membrane (22) est accouplée à la pièce de pression (44) au moyen d'un élément de liaison (24), l'élément de liaison (24) présentant une paroi (56) qui fait saillie de la membrane (22) en direction de la pièce de pression (44) et sur laquelle un crochet d'arrêt (58) faisant saillie latéralement est prévu sur un côté et un espace libre (50) est prévu sur l'autre côté, de sorte que la paroi (56) peut dévier pour relier le crochet d'arrêt (58) à un logement (63) correspondant sur la pièce de pression (44), une tige (74) fixée à demeure étant prévue, qui s'engage dans l'espace libre (50) lorsque la membrane (22) est soulevée du siège (32) de soupape du corps (20) de soupape et sort de l'espace libre (50) lorsque la membrane (22) repose sur le siège (32) de soupape.

2. Soupape à membrane selon la revendication 1, **caractérisée en ce que** l'élément de liaison (24) est en forme de pot et l'ouverture est orientée en direction de la pièce de pression (44).

3. Soupape à membrane selon la revendication 2, **caractérisée en ce que** l'élément de liaison (24) en forme de pot comprend une section cylindrique et présente le ou les crochets d'arrêt (58) sur sa périphérie extérieure.

4. Soupape à membrane selon l'une quelconque des revendications précédentes, **caractérisée en ce que** la pièce de pression (44) est entourée par un manchon (64) fixé à demeure et est mobile dans le manchon (64).

5. Soupape à membrane selon la revendication 4, **caractérisée en ce qu'**un boulon transversal (68) est logé dans le manchon (64).

6. Soupape à membrane selon la revendication 5, **caractérisée en ce que** la pièce de pression (44) comprend un passage (70) s'étendant transversalement à son sens de mouvement, lequel est traversé par le boulon transversal (68).

7. Soupape à membrane selon la revendication 4 ou 5, **caractérisée en ce que** la tige (74) fixée à demeure est logée sur le boulon transversal (68).

8. Soupape à membrane selon l'une quelconque des revendications précédentes, **caractérisée en ce que** la tige (74) fixée à demeure traverse la pièce de pression (44) dans le sens de mouvement de celle-ci et en direction de la membrane (22).

9. Soupape à membrane selon la revendication 2 et l'une quelconque des revendications précédentes, **caractérisée en ce que** l'extrémité libre de la tige (74) fixée à demeure est formée de telle manière qu'elle s'engage dans l'élément de liaison (24) en forme de pot lorsque la membrane (22) est soulevée du siège (32) de soupape et s'applique contre la surface intérieure de la paroi (56).

10. Soupape à membrane selon la revendication 2 et l'une quelconque des revendications précédentes, **caractérisée en ce que** l'extrémité libre de la tige (74) fixée à demeure, lorsque la membrane (22) repose sur le siège (32) de soupape, sort de l'élément de liaison (24) en forme de pot.
